# EUROPEAN PATENT SPECIFICATION

(11) **EP 4 579 368 B1**
(45) Date of publication and mention of the grant of the patent: **25.11.2026**
(21) Application number: 24223525.7
(22) Date of filing: 27.12.2024
(51) Int. Cl.: G05D 1/224, G05D 1/689

(54) **DISPLAY METHOD, REMOTE CONTROL APPARATUS, AND UNMANNED AERIAL VEHICLE SYSTEM**
ANZEIGEVERFAHREN, FERNSTEUERUNGSVORRICHTUNG UND UNBEMANNTES LUFTFAHRZEUGSYSTEM
PROCÉDÉ D'AFFICHAGE, APPAREIL DE COMMANDE À DISTANCE ET SYSTÈME DE VÉHICULE AÉRIEN SANS PILOTE

(30) Priority: 29.12.2023 CN 202311867703
(43) Date of publication of application: 02.07.2025
(73) Proprietor: Autel Robotics Co., Ltd., Shenzhen, Guangdong 518055 (CN)
(72) Inventor: WANG, Zhongyu, Shenzhen, Guangdong, 518055 (CN)
(74) Representative: Gulde & Partner

(56) References cited:
- CN-A- 108 820 214
- US-A1- 2019 333 260
- US-A1- 2021 385 386
- US-B1- 8 620 464

## Description

### BACKGROUND

### Technical Field

Embodiments of this application relate to the technical field of image display, and in particular, to a display method, a remote control apparatus, and an unmanned aerial vehicle system.

### Related Art

An unmanned aerial vehicle is a flying device that gradually begins to be practical at present. A camera is loaded on the unmanned aerial vehicle, and the unmanned aerial vehicle has a plurality of advantages of small occupation area, flexible takeoff and landing, capability of hovering, convenience in control, and the like, which can be applied to fields such as firefighting and police affairs to achieve cruise shooting or designated monitoring in required areas.

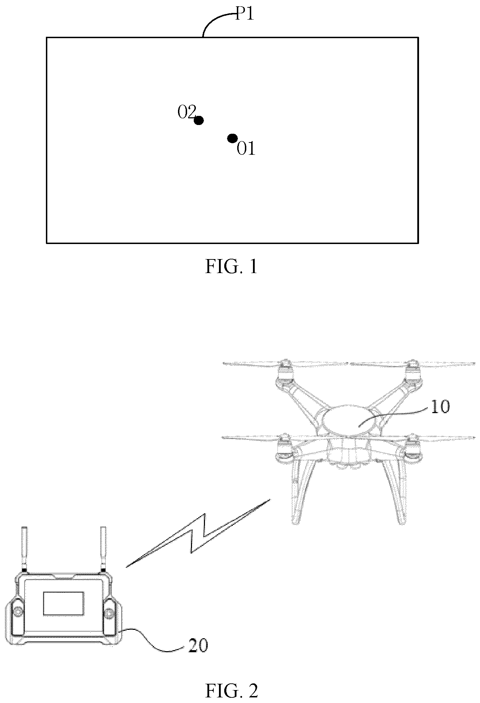

At present, in an unmanned aerial vehicle with a launching apparatus, after projectile is launched, as shown in FIG. 1, the unmanned aerial vehicle will shoot an image P1 containing an actual projection point O2 and a target projection point O1 of the launching apparatus. A subsequent user needs to visually observe a deviation between the actual projection point O2 and the target projection point O1 to adjust the launching apparatus. However, in the image P1, the user cannot intuitively learn a deviation angle and a deviation distance between the actual projection point O2 and the target projection point O1 from the image, resulting in an increase in difficulty in calibrating the launching apparatus.

Conventional unmanned aerial vehicle systems and display methods applied to them are disclosed by CN 108 820 214A, US 2019/333260 A1, US 2021/385386 A1, and US 8 620 464 B1.

### SUMMARY

The invention is defined by the appended set of claims. The description that follows is subjected to this limitation. Any disclosure lying outside the scope of said claims is only intended for illustrative as well as comparative purposes.

Embodiments of this application provide a display method, a remote control apparatus, and an unmanned aerial vehicle system. In this method, an observation coordinate system is displayed in an image, so that intuitiveness of an actual deviation between an actual projection point and a target projection point can be improved, the actual deviation can be calculated subsequently, and difficulty in calibrating a launching apparatus by a subsequent user can be reduced.

Compared with a related art, this application has the following beneficial effects: different from conditions of the related art, the embodiments of this application provide a display method, a remote control apparatus, and an unmanned aerial vehicle system. The display method includes: obtaining GPS coordinates of an origin in an observation coordinate system to be displayed in a display screen; obtaining GPS coordinates of a plurality of scale points in at least one physical direction based on the GPS coordinates of the origin; obtaining image coordinates of the plurality of scale points in the display screen based on the GPS coordinates of the plurality of scale points; and displaying the observation coordinate system and the target projection point in the display screen based on the image coordinates of the plurality of scale points and the origin. In this method, an observation coordinate system is displayed in an image, so that intuitiveness of an actual deviation between an actual projection point and a target projection point can be improved, the actual deviation can be calculated subsequently, and difficulty in calibrating a launching apparatus by a subsequent user can be reduced.

### BRIEF DESCRIPTION OF THE DRAWINGS

One or more embodiments are exemplified by pictures in corresponding accompanying drawings. These exemplary descriptions do not constitute a limitation to the embodiments. Elements/modules and steps in the accompanying drawings having the same reference numerals are represented as similar elements/modules and steps. Unless otherwise stated, figures in the accompanying drawings do not constitute a proportional limitation.
FIG. 1 is a schematic diagram of an image according to a related art;
FIG. 2 is a schematic structural diagram of an application scenario according to an embodiment of this application;
FIG. 3 is a schematic flowchart of a display method according to an embodiment of this application;
FIG. 4 is a schematic diagram of displaying of a display screen according to an embodiment of this application;
FIG. 5 is a schematic structural diagram of a remote control apparatus according to an embodiment of this application; and
FIG. 6 is a structural block diagram of an unmanned aerial vehicle system according to an embodiment of this application.

### DETAILED DESCRIPTION

This application will be described below in combination with specific embodiments. The following embodiments will help those skilled in the art further understand this application, but do not limit this application in any form. It is to be noted that for those of ordinary skill in the art, several modifications and improvements can be made without departing from a concept of this application. All of these belong to the scope of protection of this application.

To facilitate understanding of this application, this application will be described in more detail below with reference to accompanying drawings and the specific embodiments. Unless otherwise defined, all technical and scientific terms used in this specification have the same meaning as those commonly understood by those skilled in the art. The terms used in the specification of this application are only for the purpose of describing specific embodiments, but are not used for limiting this application. The term "and/or" used in this specification includes any and all combinations of one or more of the associated listed items.

It is to be noted that, if there is no conflict, various features in the embodiments of this application may be combined with each other, which all fall within the scope of protection of this application. In addition, although division of functional modules is performed in a schematic diagram of an apparatus, in some cases, the division may be different from division of modules in the apparatus. In addition, words "first", "second", and the like used herein do not limit data and execution order, but only distinguish the same or similar items with basically the same functions and effects.

A display method in the embodiments of this application may be applied to a remote control apparatus of an unmanned aerial vehicle. The unmanned aerial vehicle may be any type of unmanned aerial vehicle, for example, a fixed wing unmanned aerial vehicle, a tiltrotor unmanned aerial vehicle, a rotary wing unmanned aerial vehicle, an umbrella wing unmanned aerial vehicle, and a flapping wing unmanned aerial vehicle. The unmanned aerial vehicle can provide a plurality of operations with functional services, for example, may be configured to launch, aerial photography, inspection, monitoring, or transporting. During operation of the unmanned aerial vehicle, any type of processor on the remote control apparatus can perform the display method according to the embodiments of this application, and can effectively reduce difficulty in calibrating a launching apparatus.

To facilitate statement and understanding, application scenarios in the embodiments of this application are described in detain by taking a quadrotor unmanned aerial vehicle shown in FIG. 2 as an example. As shown in FIG. 1, the application scenarios may include: an unmanned aerial vehicle 10 and a remote control apparatus 20.

The unmanned aerial vehicle 10 refers to an unmanned aircraft that is controlled by a remote control apparatus or a self-contained program control apparatus and carries a mission load. The unmanned aerial vehicle may have a corresponding size, material, or shape (for example, having four arms configured to arrange propeller blades) according to requirements of actual situations, provide corresponding accommodation spaces and mounting positions, and are configured to carry one or more functional components to realize one or more functions of the unmanned aerial vehicle.

For example, the functional components may include, but are not limited to, a driving motor, a rechargeable battery, a camera component, a Global Positioning System (GPS) chip, a Global Navigation Satellite System (GNSS) chip, laser radar, a launching apparatus, and the like. The driving motor is configured to drive the propeller blades to rotate to provide flight power. The camera component is mounted on a gimbal, can adjust a shooting angle, and is configured to shoot image information. The rechargeable battery is configured to provide electric energy for the driving motor, the camera component, the laser radar, or the launching apparatus. The GPS chip or the GNSS chip are configured to achieve positioning, so as to determine a position of a target object according to a position of the unmanned aerial vehicle and a distance measured by the laser radar. The laser radar is configured to scan a surrounding environment to discover an obstacle, and position based on a Simultaneous Localization and Mapping (SLAM) algorithm, so as to determine the position of the target.

The launching apparatus is a device configured to launch a projectile (for example, a fire extinguishing bomb or an explosive projectile). The unmanned aerial vehicle is endowed with different functions based on different types of projectile materials. For example, when the projectile is the fire extinguishing bomb, the unmanned aerial vehicle may be configured to extinguish fire; and when the projectile is the explosive projectile, the unmanned aerial vehicle may be configured for blasting work. In some embodiments, the launching apparatus includes a cylinder frame, a cylinder configured to store the projectile, and an ejection generating apparatus. The cylinder is mounted on the cylinder frame. The cylinder is arranged on an unmanned aerial vehicle body, and an angle of the cylinder can be adjusted relative to the unmanned aerial vehicle body, so as to adjust a launching angle. The ejection generating apparatus is connected to the cylinder, and can eject the projectile out of the cylinder.

In addition, a control system is arranged in the unmanned aerial vehicle body. Herein, the term "control system" represents components related to logical judgment and control in the unmanned aerial vehicle. The control system may be implemented by using any proper type of electronic computing device according to requirements of actual situations. In some embodiments, the control system may be divided into a plurality of sub-control systems that communicate with each other, so as to respectively control different aspects.

The remote control apparatus 20 is an independent component that is spatially separated from the unmanned aerial vehicle 10. The remote control apparatus 20 may be a dedicated remote control terminal paired with the unmanned aerial vehicle 10 for use, and achieves remote communication connection with the unmanned aerial vehicle 10 through any proper type of communication protocol.

In addition, one or more input devices and/or output devices may alternatively be arranged on the remote control apparatus 20, and configured to receive an operation instruction of an operator and show unmanned aerial vehicle related information to a user, so that the operator can remotely interact with the unmanned aerial vehicle 10 (for example, remotely controlling a flight attitude and a flight speed of the unmanned aerial vehicle 10, observing an image picture shot by a camera carried on the unmanned aerial vehicle 10, or controlling a launching angle of the launching apparatus). For example, the foregoing input device may include: a control key, a rocker, a thumb wheel, a microphone, or a touchscreen, while the foregoing output device may include: a display, an indicator light group, or a speaker.

Therefore, based on a remote data connection established between the unmanned aerial vehicle 10 and the remote control apparatus 20, mutual data transmission can be achieved. The user may perform a remote control operation on the unmanned aerial vehicle 10 through the remote control apparatus 20, so as to complete a flight task required to be performed (for example, calibrating the launching angle for launching).

It may be understood that, in some other embodiments of this application, the unmanned aerial vehicle or the remote control apparatus may include more or fewer components than those shown in the figure, or combine some components, or split some components, or have different component arrangements.

Before introducing the embodiments of this application, a display method known to the inventor of this application is briefly introduced first, so as to facilitate embodiments of this application subsequently.

The display method known to the inventor of this application is usually that there is no observation coordinate system in a display, in this way, a deviation angle and a deviation distance between an actual projection point and a target projection point cannot be learned intuitively during manual aiming, which results in low accuracy, and time-consuming and inefficient aiming.

For the foregoing problems, the embodiments of this application provide a display method, a remote control apparatus, and an unmanned aerial vehicle system. In this method, an observation coordinate system is displayed in an image, so that intuitiveness of an actual deviation between an actual projection point and a target projection point can be improved, the actual deviation can be calculated subsequently, and difficulty in calibrating a launching apparatus by a subsequent user can be reduced.

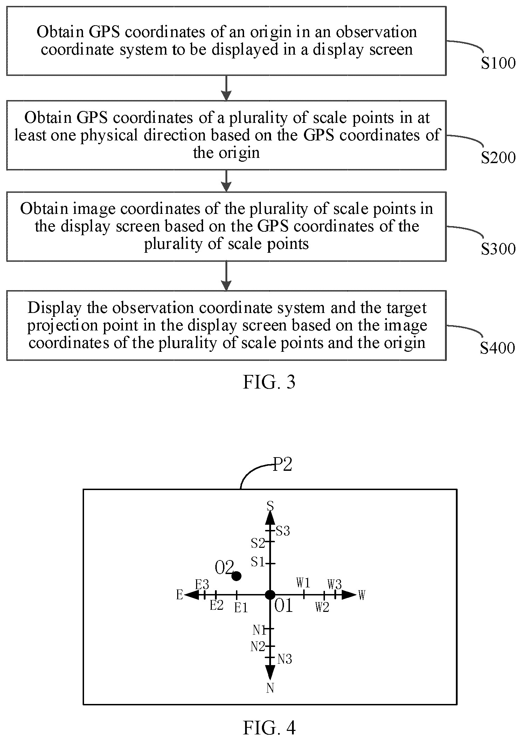

In a first aspect, the embodiments of this application provide a display method. The display method may be performed by one or more processors of a remote control apparatus in an unmanned aerial vehicle system. Please refer to FIG. 3 and FIG. 4 together, the display method includes the following steps:
Step S100: Obtain GPS coordinates of an origin in an observation coordinate system to be displayed in a display screen.

It may be understood that, an image P2 is an image displayed in the display screen of the remote control apparatus. Please refer to FIG. 4, the origin is any point in the image P2. To facilitate user observation, the origin is usually an image center point in the image P2. Moreover, in general, to further facilitate the user observation, the origin may be a target projection point O1. In an actual application, the target projection point O1 may be the image center point, or may not be the image center point. The origin may be set by a user in advance, or may be determined through an input operation of the user. Specifically, a center of the image P2 may be set as the origin in advance, or, the user is prompted to input origin information in an interactive interface, and the origin is determined after the input information of the user is obtained. It is to be noted that, in the embodiments shown herein, the target projection point O1 is taken as the origin for describing. In the actual application, the origin may not be the target projection point O1.

The GPS coordinates of the origin is the coordinates of the origin in a GPS coordinate system, and the GPS coordinate system may be a WGS-84 coordinate system.

Step S200: Obtain GPS coordinates of a plurality of scale points in at least one physical direction based on the GPS coordinates of the origin. Physical distances between two adjacent scale points in the same physical direction are equal.

The physical direction may be any of directions of east, west, south, north, southeast, northeast, southwest, or northwest.

The physical distance between two adjacent scale points in the same physical direction is a distance between GPS coordinates of the two adjacent scale points in the same physical direction, and is a physical scale distance in the physical direction. For example, the physical distance between a scale point N1 and a scale point N2 is a distance between GPS coordinates of the scale point N1 and the scale point N2.

Physical scale distances in different physical directions may be equal, or may not be equal, which may be set according to actual needs. It may be understood that intuitiveness of the image P2 may be improved when the physical scale distances in different physical directions are equal. The physical scale distances may be distances such as 10 m and 100 m. For example, a physical scale distance in a north direction and a physical scale distance in a south direction are both 10 m, then a physical distance between two adjacent scale points in the north direction is 10 m, and the physical distance between the two adjacent scale points in the south direction is 10 m.

Specifically, when the physical scale distances in different physical directions are equal, and after the GPS coordinates of the origin are obtained, the physical distance between the two adjacent scale points in the same physical direction may be obtained, and GPS coordinates of a plurality of scale points in the north direction, GPS coordinates of the plurality of scale points in the south direction, GPS coordinates of the plurality of scale points in an east direction, and GPS coordinates of the plurality of scale points in a west direction of the origin may be calculated based on the GPS coordinates of the origin and the physical distance.

Step S300: Obtain image coordinates of the plurality of scale points in the display screen based on the GPS coordinates of the plurality of scale points.

The image coordinates of the plurality of scale points in the image P2 are coordinates of the plurality of scale points in an image coordinate system. The image coordinate system is a coordinate system established on a plane where a display chip is located. Specifically, after the GPS coordinates of the plurality of scale points are obtained, coordinate transformation may be performed on the GPS coordinates of the plurality of scale points to obtain the image coordinates of the plurality of scale points.

Step S400: Display the observation coordinate system and the target projection point in the display screen based on the image coordinates of the plurality of scale points and the origin.

Specifically, marking may be performed in the image P2 based on the image coordinates of the plurality of scale points. Marking patterns for the scale points in an embodiment shown in FIG. 4 are short lines. In the actual application, the marking patterns of the scale points may be shapes such as the short lines, dots, and rectangles. This is not limited here.

Then, in the image P2, the plurality of scale points in the same physical direction are connected to the origin O1, and a coordinate direction of the origin O1 pointing to the scale points is a corresponding psychical direction. As shown in FIG. 4, if a psychical direction of a scale point N1, a scale point N2, and a scale point N3 relative to the origin O1 is the north direction, after the origin O1, the scale point N1, the scale point N2, and the scale point N3 in the north direction are connected, a coordinate direction N of the origin O1 pointing to the scale point N3 is the north direction; if a psychical direction of a scale point S1, a scale point S2, and a scale point S3 relative to the origin O1 is the south direction, after the origin O1, the scale point S1, the scale point S2, and the scale point S3 in the south direction are connected, a coordinate direction S of the origin O1 pointing to the scale point S3 is the south direction; if a psychical direction of a scale point E1, a scale point E2, and a scale point E3 relative to the origin O1 is the east direction, after the origin O1, the scale point E1, the scale point E2, and the scale point E3 in the south direction are connected, a coordinate direction E of the origin O1 pointing to the scale point E3 is the east direction; and if a psychical direction of a scale point W1, a scale point W2, and a scale point W3 relative to the origin O1 is the west direction, after the origin O1, the scale point W1, the scale point W2, and the scale point W3 in the west direction are connected, a coordinate direction W of the origin O1 pointing to the scale point W3 is the west direction.

It may be understood that, since the physical distances between two adjacent scale points in the same physical direction are equal, in the image P2 and in the image coordinate system, distances between two adjacent scale points in the same coordinate direction are not equal. For example, in the image coordinate system and in the coordinate direction N, the distance between the scale point N1 and the scale point N2 is greater a distance between the scale point N2 and the scale point N3.

In addition, after the image containing the target projection point is obtained through the image collection apparatus, image coordinates of the target projection point may be calculated and may be displayed in the display screen.

In this embodiment, the observation coordinate system is displayed in the image P2 displayed in the display screen, and the observation coordinate system is marked with physical directions and scales, so that an actual projection point O2, for example, "a smoking area" in the image P2, may be observed in the image P2 after a launching apparatus 11 launches an object subsequently. In this way, a user may intuitively estimate deviation information, for example, a deviated physical distance and a deviated physical angle, between the actual projection point O2 and the target projection point O1 based on the actual projection point O2, the target projection point O1, and the observation coordinate system. For example, compared with FIG. 1, FIG. 4 displays the observation coordinate system, it may be intuitively learned that the actual projection point O2 is in the southeast direction of the target projection point O1, and an actual deviation may be calculated based on the observation coordinate system subsequently, thereby reducing difficulty in calibrating a launching apparatus by a subsequent user.

In some embodiments, the display method further includes the following steps:
Step S500: After launching of the launching apparatus, the image collection apparatus obtains a first image at a moment when the actual projection point is hit and a second image after a preset time after the actual projection point is hit, where the second image contains a white smoke area generated at the actual projection point.

The first image is an image collected by the image collection apparatus at the moment when the actual projection point is hit, and the second image is an image collected by the image collection apparatus after a preset time after the actual projection point is hit. The preset time may be 0.5 s, 1 s, and the like, which may be set according to actual requirements of the user, as long as the second image contains white smoke generated after the actual projection point is hit by a projectile.

Step S600: Obtain first estimated image coordinates of the actual projection point based on the first image, and obtain second estimated image coordinates of the actual projection point based on the second image.

After the first image is subjected to preprocessing, for example, brightness and contrast adjustment and filtering by a filtering algorithm, to improve the definition of the actual projection point in the first image, image coordinates of the actual projection point in the first image, that is, the first estimated image coordinates, are obtained.

Similarly, after the second image is subjected to preprocessing, for example, brightness and contrast adjustment and filtering by a filtering algorithm, to improve the definition of the white smoke area in the second image, an edge of the white smoke area is detected to obtain an edge detection result of the white smoke area. The edge detection result includes image coordinates of the white smoke area in the second image. Finally, image coordinates of the actual projection point in the second image, that is, the second estimated image coordinates, are obtained based on the edge detection result.

Specifically, when the image coordinates of the actual projection point in the second image are obtained based on the edge detection result, image coordinates of a center of the white smoke area may be determined based on the image coordinates of the white smoke area in the second image, and the image coordinates of the center of the white smoke area may be taken as the image coordinates of the actual projection point in the second image.

Step S700: Obtain GPS coordinates of the unmanned aerial vehicle, obtain GPS coordinates of the actual projection point based on the GPS coordinates of the unmanned aerial vehicle, the first estimated image coordinates, and the second estimated image coordinates, and display the actual projection point in the display screen.

The unmanned aerial vehicle is installed with a GPS, which can accurately determine GPS positioning, that is, GPS coordinates (longitude, latitude, altitude, and the like), of the unmanned aerial vehicle. Specifically, the GPS can receive signals from a satellite, and may determine GPS positioning where the unmanned aerial vehicle is located, that is, GPS coordinates of the unmanned aerial vehicle, by processing and calculating these signals.

Then, third estimated image coordinates of the actual projection point may be determined based on the first estimated image coordinates and the second estimated image coordinates, for example, an average value of the first estimated image coordinates and the second estimated image coordinates may be calculated, and the average value is taken as the third estimated image coordinates, so as to improve the position accuracy of the actual projection point. Then, after the third estimated image coordinates are obtained, the GPS coordinates of the actual projection point may be calculated in combination with the GPS coordinates of the unmanned aerial vehicle, and the actual projection point is displayed on the display screen.

In this embodiment, position coordinates of the actual projection point are determined in combination with the first image and the second image, so that the position accuracy of the actual projection point can be improved.

In some embodiments, the display method further includes the following steps:
Step S800: Obtain deviation information between the target projection point O1 and the actual projection point O2 based on the image P2.

Laser radar is mounted on the unmanned aerial vehicle. The laser radar may measure a distance from a surrounding object to the unmanned aerial vehicle based on a working principle of the laser radar. During aiming a target point by the unmanned aerial vehicle, the laser radar may measure a distance from a projected target object to the unmanned aerial vehicle and an angle of the projected target in polar coordinates, that is, the laser radar may collect the distance and an orientation of the projected object to the unmanned aerial vehicle. In a case that the GPS coordinates of the unmanned aerial vehicle, and the distance and the orientation of the target point are known, GPS coordinates of the target projection point O1 may be calculated. In some embodiments, the unmanned aerial vehicle sends the GPS positioning of the unmanned aerial vehicle and the distance and the orientation of the laser radar to the remote control apparatus, and the remote control apparatus may calculate based on the GPS positioning of the unmanned aerial vehicle and the distance and the orientation of the laser radar to obtain the GPS coordinates of the target projection point O1. In some embodiments, the unmanned aerial vehicle may directly calculate the GPS coordinates of the target projection point O1, and then sends the GPS coordinates of the target projection point O1 to the remote control apparatus.

However, after the GPS coordinates of the actual projection point O2 are obtained based on the image P2, deviation information is finally calculated based on the GPS coordinates of the target projection point O1 and the GPS coordinates of the actual projection point O2. The deviation information includes a deviated physical distance, a deviated physical distance, and the like.

In this embodiment, the deviation information may be calculated based on the image P2, so that accuracy of calibrating the launching apparatus subsequently is improved.

In some of the embodiments, step S100 includes the following steps:
Step S110: Obtain image coordinates of the origin in the display screen.

The image coordinates of the origin in the image P2 are coordinates of the origin in the image P2 in an image coordinate system.

Step S120: Obtain GPS coordinates of the origin based on the image coordinates of the origin.

In a specific embodiment, this step includes: obtaining a transformation relationship between an image coordinate system and a GPS coordinate system, and performing coordinate transformation on the image coordinates of the origin based on the transformation relationship to obtain the GPS coordinates of the origin.

The transformation relationship between the image coordinate system and the GPS coordinate system includes a transformation relationship between the image coordinate system and an aircraft coordinate system, a transformation relationship between the aircraft coordinate system and a world coordinate system, and a transformation relationship between the world coordinate system and the GPS coordinate system. The world coordinate system may be a North-East-Down coordinate system. The aircraft coordinate system is established by taking an optical center of the image collection apparatus (an optical center of the camera) as an origin, taking an optical axis of the image collection apparatus as a zc axis, or an xc axis and a yc axis orthogonal to the zc axis.

Then, after image coordinates of the origin of the observation coordinate system in the image coordinate system are obtained, coordinates of the origin of the observation coordinate system in the aircraft coordinate system may be obtained based on the transformation relationship between the image coordinate system and the aircraft coordinate system, and the image coordinates of the origin of the observation coordinate system; then, coordinates of the origin of the observation coordinate system in the world coordinate system may be obtained based on the transformation relationship between the aircraft coordinate system and the world coordinate system, and the coordinates of the origin of the observation coordinate system in the aircraft coordinate system; and finally, coordinates of the origin of the observation coordinate system in the GPS coordinate system may be obtained based on the transformation relationship between the world coordinate system and the GPS coordinate system, and the coordinates of the origin of the observation coordinate system in the world coordinate system. For the foregoing calculating process, refer to a related art. This is not limited here.

In another specific embodiment, this step may include: obtaining a mapping relationship table between the image coordinates and the GPS coordinate, and querying based on the image coordinates of the origin and the corresponding relationship table to obtain the GPS coordinates of the origin. The mapping relationship table includes a one-to-one mapping relationship between the image coordinates and the GPS coordinates. The mapping relationship table may be established based on the transformation relationship. In this embodiment, the GPS coordinates may be obtained based on the mapping table after the image coordinates of the origin of the observation coordinate system are obtained.

In this embodiment, GPS coordinates of the origin of the observation coordinate system in the world coordinate system may be calculated through the image coordinates of the origin of the observation coordinate system in the image coordinate system.

In some of the embodiments, step S300 includes: performing coordinate transformation on the GPS coordinates of the plurality of scale points based on the transformation relationship to obtain the image coordinates of the plurality of scale points.

Then, after the GPS coordinates of the scale points are obtained, coordinates of the scale points in the world coordinate system may be obtained based on the transformation relationship between the world coordinate system and the GPS coordinate system; then, coordinates of the scale points in the aircraft coordinate system may be obtained based on the transformation relationship between the aircraft coordinate system and the world coordinate system and finally, image coordinates of the scale points may be obtained based on the transformation relationship between the image coordinate system and the aircraft coordinate system, and the coordinates of the scale points in the aircraft coordinate system. For the foregoing calculating process, refer to a related art. This is not limited here.

In this embodiment, the image coordinates of the scale points may be calculated through coordinate transformation calculation based on the GPS coordinates of the scale points.

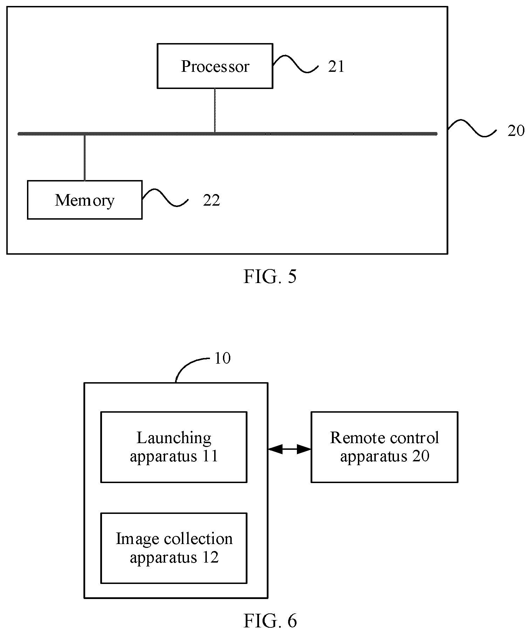

In a second aspect, the embodiments of this application further provide a remote control apparatus 20. Please refer to FIG. 5, which is a schematic structural diagram of a remote control apparatus 20 that can perform the display method according to the embodiments of this application. The remote control apparatus 20 may be the remote control apparatus 20 shown in FIG. 2.

The remote control apparatus 20 includes: at least one processor 21; and a memory 22 in communication connection with the at least one processor 21. In FIG. 5, one processor 21 is taken as an example. The memory 22 stores instructions executable by least one processor 21, and the instruction is executed by least one processor 21, so that the least one processor 21 can perform the display method according to any of the following embodiments. The processor 21 and the memory 22 may be connected by a bus or other means. In FIG. 2, a bus connection is taken as an example. It may be understood that the remote control apparatus 20 shown in FIG. 5 is merely an example, and does not impose any limitation on the function and scope of use of the embodiments of this application.

The processor 21 is configured to support the remote control apparatus 20 to perform corresponding functions in the display method. The processor 21 may be a Central Processing Unit (CPU), a Network Processor (NP), a hardware chip, or any combinations thereof. The foregoing hardware chip may be an Application Specific Integrated Circuit (ASIC), a Programmable Logic Device (PLD), a combination thereof. The foregoing PLD may be a Complex Programmable Logic Device (CPLD), a Field-Programmable Gate Array (FPGA), Generic Array Logic (GAL), or any combinations thereof.

The memory 22, as a non-volatile computer-readable storage medium, may be configured to store non-volatile software programs, non-volatile computer executable programs, and modules, for example, program instructions/modules corresponding to the display method according to any of the embodiments of this application. The processor 21 executes various functional applications and data processing of the remote control apparatus 20 by running the non-volatile software programs, instructions and modules stored in the memory 22, that is, implementing the display method according to any of the following embodiments.

The memory 22, as a non-transient computer-readable storage medium, may be configured to store non-transient software programs, non-transient computer executable programs, and modules, for example, the program instructions/modules corresponding to the display method according to the embodiments of this application. The processor 201 may implement the display method according to any of the following method embodiments by running the non-transient software programs, instructions and modules stored in the memory 22.

The memory 22 may include a Volatile Memory (VM), for example, a Random-Access Memory (RAM); the memory 22 may alternatively include a Non-Volatile Memory (NMV), for example, a Read-Only Memory (ROM), a flash memory, a Hard Disc Drive (HVD), or a Solid-State Drive (SSD); or the memory 22 may further include combinations of the foregoing types.

It may be understood that the remote control apparatus 20 further includes other hardware or software supporting operation. The hardware may include a keyboard, a mouse, a display, and the like. The software may include an operating system and the like. The operating system is a program that manages and controls hardware and software resources of the an electronic device. The software may further include various applications (apps). Here, other parts of the remote control apparatus 20 that do not involve improvements to the embodiments of this application will not be described.

According to the previous text, it may be understood that the display method according to the embodiments of this application may be implemented by various types of electronic devices having a processing capability, for example, may be implemented by a processor of an electronic device or implemented by another device having the processing capability. Another device having the processing capability may be an intelligent terminal, a server, or the like that is in communication connection with the electronic device.

The foregoing products may perform the method according to the embodiments of this application, and have corresponding functional modules for implementing the method, and beneficial effects. For technical details that are not described in detail in this embodiment, refer to the method according to the embodiments of this application.

In a first aspect, the embodiments of this application provide an unmanned aerial vehicle system. Please refer to FIG. 6, the unmanned aerial vehicle system includes an unmanned aerial vehicle 10 and a remote control apparatus 20. The remote control apparatus 20 is in communication connection with the unmanned aerial vehicle 10. The unmanned aerial vehicle 10 includes a launching apparatus 11 and an image collection apparatus 12. The remote control apparatus 20 is configured to receive a control instruction of a user, and sends the control instruction to the unmanned aerial vehicle 10 to control the launching apparatus 11. The remote control apparatus 20 is further configured to obtain an image collected by the image collection apparatus 12, and the image contains a target projection point O1 of the launching apparatus 11.

The unmanned aerial vehicle 10 further includes wings, a body, a driving structure, a tail, a sensor, and a load and control system. The wings of the unmanned aerial vehicle are usually similar to wings of an aircraft, and are configured to provide a lift force to support flight. A design of the wings may affect flight performance and stability of the unmanned aerial vehicle. The body of the unmanned aerial vehicle is a central structure for connecting various components, and usually includes an electronic device, a power system, and other necessary components. A design of the body may affect flight characteristics and a payload capability of the unmanned aerial vehicle. The driving structure may be a propeller or a thruster. The unmanned aerial vehicle usually uses the propeller or the thruster as a power system to provide a propulsive force to propel flight. A design and a position of the propeller may affect flight performance and a control capability of the unmanned aerial vehicle. The tail usually includes a vertical tail and a horizontal tail, and are configured to stabilize flight and control a flight attitude, which can help the unmanned aerial vehicle maintain balance and directional stability. In addition, the unmanned aerial vehicle is usually provided with various sensors (such as a camera, an Infrared sensor, and a radar) and other possible loads (such as a cargo and a scientific device). These devices may be different according to purposes of the unmanned aerial vehicle. For a specific structure of the unmanned aerial vehicle 10, refer to the related art. This is not limited here.

The unmanned aerial vehicle 10 may be wirelessly connected to the remote control apparatus 20 by using communication modules, such as WIFI, Bluetooth, and cellular data. The unmanned aerial vehicle 10 may be monitored and controlled by the remote control apparatus 20. A communication connection or a remote data connection may be established between the unmanned aerial vehicle 10 and the remote control apparatus 20.

The image collection apparatus 12 may be a camera. The camera is mounted on a gimbal that can adjust a shooting angle and drive the camera to shoot at 360°, and is configured to shoot image information. For a specific structure of the image collection apparatus 12, refer to the related art. This is not limited here.

The launching apparatus 11 is a device configured to launch a projectile (for example, a fire extinguishing bomb or an explosive projectile). The unmanned aerial vehicle is endowed with different functions based on different types of projectiles. For example, when a launched projectile is the fire extinguishing bomb, the unmanned aerial vehicle may be configured to extinguish fire; and when the launched projectile is the explosive projectile, the unmanned aerial vehicle may be configured for blasting work. In some embodiments, the launching apparatus includes a cylinder frame, a cylinder configured to store the projectile, and an ejection generating apparatus. The cylinder is mounted on the cylinder frame. The cylinder is arranged on an unmanned aerial vehicle body, and an angle of the cylinder can be adjusted relative to the unmanned aerial vehicle body, so as to adjust a launching angle. The ejection generating apparatus is connected to the cylinder, and can eject the projectile out of the cylinder.

In this embodiment, the remote control apparatus 20 may perform the method according to the embodiments of this application, and has corresponding functional modules for implementing the method, and beneficial effects. For technical details that are not described in detail in this embodiment, refer to the method according to the embodiments of this application.

In some embodiments, the remote control apparatus 20 may further include a display. The display is configured to display an image, and facilitates user observation. The display may be a Light-Emitting Diode (LED) display screen, an Organic Light-Emitting Diode (OLED) display screen, and the like.

In a fourth aspect, the embodiments of this application further provide a non-volatile computer-readable storage medium. The computer readable-storage medium stores computer executable instructions. The computer executable instructions implement, when executed by one or more processors, the display method according to any of the embodiments in the third aspect described above.

In a fifth aspect, the embodiments of this application further provide a computer program product, including a computing program stored in a non-volatile computer-readable storage medium. The computer program includes program instructions, and the program instructions enable, when executed by a computer, the computer to perform the display method according to any of the embodiments in the third aspect described above.

It is to be noted that the apparatus embodiments described above are merely illustrative. Units described as separate components may be or may not be physically separated, and the components displayed as the units may be or may not be physical units, which may be located in one place or distributed to a plurality of network units. Part or all of the modules may be selected according to actual needs to achieve a purpose of a solution of this embodiment.

Through the description of the above implementations, those skilled in the art can clearly understand that each implementation may be implemented by means of software and a general hardware platform, and certainly, may be implemented through hardware. Based on such understanding, the foregoing technical solutions essentially or the part contributing to the related art may be implemented in a form of a software product. The software product may be stored in a computer-readable storage medium, such as a ROM/RAM, a magnetic disk, or an optical disc, and includes a plurality of instructions for enable at least one computer device (which may be a personal computer, a server, a network device, or the like) to perform the method according to various embodiments or some parts of the embodiments.

Finally, it is to be noted that the above embodiments are only used to illustrate the technical solutions of this application, and are not limited thereto. The technical features in the above embodiments or different embodiments may alternatively be combined under the concept of this application, the steps may be implemented in any order, there are many other variations of different aspects of this application as described above, and for the sake of brevity, they are not provided in the details. Although this application has been described in detail with reference to the foregoing embodiments, those skilled in the art should understand that the technical solutions described in the foregoing embodiments are modified, or some technical features are equivalently replaced, but the modifications and replacements do not make the essence of the corresponding technical solutions depart from the scope of the technical solutions of various embodiments of this application.

## Claims

1. A display method, applied to an unmanned aerial vehicle system, wherein the unmanned aerial vehicle system comprises an unmanned aerial vehicle (10), the unmanned aerial vehicle (10) comprises a launching apparatus (11) for launching a projectile and an image collection apparatus (12), the image collection apparatus (12) is configured to obtain an image (P2) containing a target projection point of the launching apparatus on the ground (O1), and the display method comprises:
obtaining image coordinates of an origin point in the display screen, the origin point being selected on the ground within the image (P2);
obtaining Global Positioning System, GPS, coordinates of the origin point by performing a coordinate transformation on the image coordinates of the origin point based on a transformation relationship between an image coordinate system and a GPS coordinate system ;
calculating, based on the GPS coordinates of the origin point, GPS coordinates of a plurality of scale points (N1-N3, S1-S3, E1-E3, W1-W3) in at least one geographic direction, wherein physical distances between two adjacent scale points in the same geographic direction are equal;
obtaining image coordinates of the plurality of scale points in the display screen by performing a coordinate transformation on the GPS coordinates of the plurality of scale points based on the transformation relationship; and
displaying, on the image (P2) containing the target projection point (O1), a visual observation coordinate system based on the obtained image coordinates of the origin point and the plurality of scale points, the observation coordinate system comprising coordinate axes having marking patterns at the image positions of the plurality of scale points, the marking patterns representing physical distances on the ground;

2. The display method according to claim 1, further comprising:
after a projectile is launched by the launching apparatus (11), obtaining, by the image collection apparatus (12), a first image at a moment when an actual projection point (O2) is hit and a second image after a preset time after the actual projection point (O2) is hit, wherein the second image contains a white smoke area generated at the actual projection point (O2);
obtaining first estimated image coordinates of the actual projection point (O2) based on the first image;
obtaining second estimated image coordinates of the actual projection point (O2) based on the second image; and
obtaining GPS coordinates of the unmanned aerial vehicle (10), obtaining GPS coordinates of the actual projection point (O2) based on the GPS coordinates of the unmanned aerial vehicle (10), the first estimated image coordinates, and the second estimated image coordinates, and displaying the actual projection point (O2) in the display screen.

3. The display method according to claim 2, further comprising:
obtaining deviation information between the target projection point (O1) and the actual projection point (O2) based on the image.

4. A remote control apparatus (20), comprising:
at least one processor (21); and
a memory (22) that is in communication connection with the at least one processor (21), wherein
the memory (22) stores instructions executable by the at least one processor (21), and the instructions are executed by the at least one processor (21) to enable the at least one processor (21) to perform the display method according to any of claims 1 to 3.

5. An unmanned aerial vehicle system, comprising an unmanned aerial vehicle (10) and the remote control apparatus (20) according to claim 4, wherein
the remote control apparatus (20) is in communication connection with the unmanned aerial vehicle (10), and the unmanned aerial vehicle (10) comprises a launching apparatus (11) for launching a projectile and an image collection apparatus (12), wherein
the remote control apparatus (20) is configured to receive a control instruction of a user, and sends the control instruction to the unmanned aerial vehicle (10) to control the launching apparatus (11); and
the remote control apparatus (20) is further configured to obtain an image collected by the image collection apparatus (12), and the image contains a target projection point of the launching apparatus on the ground (O1).

6. The unmanned aerial vehicle system according to claim 5, wherein the remote control apparatus (20) further comprises a display; and
the display is configured to display the image (P2).

7. A computer-readable storage medium, storing computer executable instructions, wherein the computer executable instructions are used for enabling a computer to perform the display method according to any of claims 1 to 3.

8. A computer program product, comprising a computer program stored in a computer-readable storage medium, wherein the computer program comprises program instructions which, when executed by a computer, cause the computer to perform the display method according to any of claims 1 to 3.

## Patentansprüche

1. Anzeigeverfahren, das auf ein unbemanntes Luftfahrzeugsystem angewendet wird, wobei das unbemannte Luftfahrzeugsystem ein unbemanntes Luftfahrzeug (10) umfasst, das unbemannte Luftfahrzeug (10) eine Startvorrichtung (11) zum Starten eines Projektils und eine Bildsammelvorrichtung (12) umfasst, die Bildsammelvorrichtung (12) dazu konfiguriert ist, ein Bild (P2) zu erhalten, das einen Zielprojektionspunkt der Startvorrichtung auf dem Boden (O1) enthält, und das Anzeigeverfahren Folgendes umfasst:
Erhalten von Bildkoordinaten eines Ausgangspunktes auf dem Anzeigebildschirm, wobei der Ausgangspunkt auf dem Boden innerhalb des Bildes (P2) ausgewählt ist;
Erhalten von Koordinaten des Ausgangspunktes eines globalen Positionierungssystems, GPS, durch Durchführen einer Koordinatentransformation an den Bildkoordinaten des Ausgangspunktes basierend auf einer Transformationsbeziehung zwischen einem Bildkoordinatensystem und einem GPS-Koordinatensystem;
Berechnen, basierend auf den GPS-Koordinaten des Ausgangspunktes, von GPS-Koordinaten einer Vielzahl von Skalenpunkten (N1-N3, S1-S3, E1-E3, W1-W3) in mindestens einer geografischen Richtung, wobei physische Abstände zwischen zwei benachbarten Skalenpunkten in der gleichen geografischen Richtung gleich sind;
Erhalten von Bildkoordinaten der Vielzahl von Skalenpunkten auf dem Anzeigebildschirm durch Durchführen einer Koordinatentransformation an den GPS-Koordinaten der Vielzahl von Skalenpunkten basierend auf der Transformationsbeziehung; und
Anzeigen, auf dem Bild (P2), das den Zielprojektionspunkt (O1) enthält, eines visuellen Beobachtungskoordinatensystems basierend auf den erhaltenen Bildkoordinaten des Ausgangspunktes und der Vielzahl von Skalenpunkten, wobei das Beobachtungskoordinatensystem Koordinatenachsen umfasst, die Markierungsmuster an den Bildpositionen der Vielzahl von Skalenpunkten aufweisen, wobei die Markierungsmuster physische Abstände auf dem Boden darstellen.

2. Anzeigeverfahren nach Anspruch 1, ferner umfassend:
nachdem ein Projektil durch die Startvorrichtung (11) gestartet wird, Erhalten, durch die Bildsammelvorrichtung (12), eines ersten Bildes in einem Moment, wenn ein tatsächlicher Projektionspunkt (O2) getroffen wird, und eines zweiten Bildes nach einer voreingestellten Zeit, nachdem der tatsächliche Projektionspunkt (O2) getroffen wird, wobei das zweite Bild eine weiße Rauchzone enthält, die an dem tatsächlichen Projektionspunkt (O2) erzeugt wird;
Erhalten von ersten geschätzten Bildkoordinaten des tatsächlichen Projektionspunktes (O2) basierend auf dem ersten Bild;
Erhalten von zweiten geschätzten Bildkoordinaten des tatsächlichen Projektionspunktes (O2) basierend auf dem zweiten Bild; und
Erhalten von GPS-Koordinaten des unbemannten Luftfahrzeugs (10), Erhalten von GPS-Koordinaten des tatsächlichen Projektionspunktes (O2) basierend auf den GPS-Koordinaten des unbemannten Luftfahrzeugs (10), den ersten geschätzten Bildkoordinaten und den zweiten geschätzten Bildkoordinaten und Anzeigen des tatsächlichen Projektionspunktes (O2) auf dem Anzeigebildschirm.

3. Anzeigeverfahren nach Anspruch 2, ferner umfassend:
Erhalten von Abweichungsinformationen zwischen dem Zielprojektionspunkt (O1) und dem tatsächlichen Projektionspunkt (O2) basierend auf dem Bild.

4. Fernsteuerungsvorrichtung (20), umfassend:
mindestens einen Prozessor (21); und
einen Speicher (22), der in Kommunikationsverbindung mit dem mindestens einen Prozessor (21) ist, wobei
der Speicher (22) Anweisungen speichert, die durch den mindestens einen Prozessor (21) ausführbar sind, und die Anweisungen durch den mindestens einen Prozessor (21) ausgeführt werden, um dem mindestens einen Prozessor (21) zu ermöglichen, das Anzeigeverfahren nach einem der Ansprüche 1 bis 3 durchzuführen.

5. Unbemanntes Luftfahrzeugsystem, umfassend ein unbemanntes Luftfahrzeug (10) und die Fernsteuerungsvorrichtung (20) nach Anspruch 4, wobei
die Fernsteuerungsvorrichtung (20) in Kommunikationsverbindung mit dem unbemannten Luftfahrzeug (10) ist und das unbemannte Luftfahrzeug (10) eine Startvorrichtung (11) zum Starten eines Projektils und eine Bildsammelvorrichtung (12) umfasst, wobei
die Fernsteuerungsvorrichtung (20) dazu konfiguriert ist, eine Steuerungsanweisung eines Benutzers zu empfangen, und die Steuerungsanweisung an das unbemannte Luftfahrzeug (10) sendet, um die Startvorrichtung (11) zu steuern; und
die Fernsteuerungsvorrichtung (20) ferner dazu konfiguriert ist, ein Bild zu erhalten, das durch die Bildsammelvorrichtung (12) gesammelt wird, und das Bild einen Zielprojektionspunkt der Startvorrichtung auf dem Boden (O1) enthält.

6. Unbemanntes Luftfahrzeugsystem nach Anspruch 5, wobei die Fernsteuerungsvorrichtung (20) ferner eine Anzeige umfasst; und
die Anzeige dazu konfiguriert ist, das Bild (P2) anzuzeigen.

7. Computerlesbares Speichermedium, das computerausführbare Anweisungen speichert, wobei die computerausführbaren Anweisungen dazu verwendet werden, einem Computer zu ermöglichen, das Anzeigeverfahren nach einem der Ansprüche 1 bis 3 durchzuführen.

8. Computerprogrammprodukt, umfassend ein Computerprogramm, das in einem computerlesbaren Speichermedium gespeichert ist, wobei das Computerprogramm Programmanweisungen umfasst, die, wenn durch einen Computer ausgeführt, den Computer dazu veranlassen, das Anzeigeverfahren nach einem der Ansprüche 1 bis 3 durchzuführen.

## Revendications

1. Procédé d'affichage, appliqué à un système de véhicule aérien sans pilote, dans lequel le système de véhicule aérien sans pilote comprend un véhicule aérien sans pilote (10), le véhicule aérien sans pilote (10) comprend un appareil de lancement (11) pour lancer un projectile et un appareil de collecte d'images (12), l'appareil de collecte d'images (12) est configuré de manière à obtenir une image (P2) contenant un point de projection cible de l'appareil de lancement au sol (O1), et le procédé d'affichage comprend :
l'obtention des coordonnées image d'un point d'origine dans l'écran d'affichage, le point d'origine étant sélectionné au sol au sein de l'image (P2) ;
l'obtention des coordonnées d'un système de positionnement global, GPS, du point d'origine en effectuant une transformation de coordonnées sur les coordonnées image du point d'origine à partir d'une relation de transformation entre un système de coordonnées image et un système de coordonnées GPS ;
le calcul, à partir des coordonnées GPS du point d'origine, des coordonnées GPS d'une pluralité de points d'échelle (N1-N3, S1-S3, E1-E3, W1-W3) dans au moins une direction géographique, les distances physiques entre deux points d'échelle adjacents dans la même direction géographique étant égales ;
l'obtention des coordonnées image de la pluralité de points d'échelle dans l'écran d'affichage en effectuant une transformation de coordonnées sur les coordonnées GPS de la pluralité de points d'échelle à partir de la relation de transformation ; et
l'affichage, sur l'image (P2) contenant le point de projection cible (O1), d'un système de coordonnées d'observation visuelle à partir des coordonnées image obtenues du point d'origine et de la pluralité de points d'échelle, le système de coordonnées d'observation comprenant des axes de coordonnées présentant des motifs de repérage aux positions d'image de la pluralité de points d'échelle, les motifs de repérage représentant des distances physiques au sol.

2. Procédé d'affichage selon la revendication 1, comprenant en outre :
après le lancement d'un projectile par l'appareil de lancement (11), l'obtention, par l'appareil de collecte d'images (12), d'une première image à un moment où un point de projection réel (O2) est atteint et d'une deuxième image après un temps prédéterminé suivant l'atteinte du point de projection réel (O2), la deuxième image contenant une zone de fumée blanche générée au point de projection réel (O2) ;
l'obtention de premières coordonnées image estimées du point de projection réel (O2) à partir de la première image ;
l'obtention de deuxièmes coordonnées image estimées du point de projection réel (O2) à partir de la deuxième image ; et
l'obtention des coordonnées GPS du véhicule aérien sans pilote (10), l'obtention des coordonnées GPS du point de projection réel (O2) à partir des coordonnées GPS du véhicule aérien sans pilote (10), des premières coordonnées image estimées, et des deuxièmes coordonnées image estimées, et l'affichage du point de projection réel (O2) sur l'écran d'affichage.

3. Procédé d'affichage selon la revendication 2, comprenant en outre :
l'obtention d'informations d'écart entre le point de projection cible (O1) et le point de projection réel (O2) à partir de l'image.

4. Appareil de commande à distance (20), comprenant :
au moins un processeur (21) ; et
une mémoire (22) qui est en liaison de communication avec ledit au moins un processeur (21), dans laquelle
la mémoire (22) stocke des instructions exécutables par ledit au moins un processeur (21), et les instructions sont exécutées par ledit au moins un processeur (21) pour permettre audit au moins un processeur (21) de mettre en œuvre le procédé d'affichage selon l'une des revendications 1 à 3.

5. Système de véhicule aérien sans pilote, comprenant un véhicule aérien sans pilote (10) et l'appareil de commande à distance (20) selon la revendication 4, dans lequel
l'appareil de commande à distance (20) est en liaison de communication avec le véhicule aérien sans pilote (10), et le véhicule aérien sans pilote (10) comprend un appareil de lancement (11) pour lancer un projectile et un appareil de collecte d'images (12), dans lequel
l'appareil de commande à distance (20) est configuré de manière à recevoir une instruction de commande de la part d'un utilisateur, et envoie l'instruction de commande au véhicule aérien sans pilote (10) pour commander l'appareil de lancement (11) ; et
l'appareil de commande à distance (20) est en outre configuré de manière à obtenir une image collectée par l'appareil de collecte d'images (12), et l'image contient un point de projection cible de l'appareil de lancement au sol (O1).

6. Système de véhicule aérien sans pilote selon la revendication 5, dans lequel l'appareil de commande à distance (20) comprend en outre un affichage ; et
l'affichage est configuré de manière à afficher l'image (P2).

7. Support de stockage lisible par ordinateur, stockant des instructions exécutables par ordinateur, dans lequel les instructions exécutables par ordinateur sont utilisées pour permettre à un ordinateur de mettre en œuvre le procédé d'affichage selon l'une des revendications 1 à 3.

8. Produit programme informatique, comprenant un programme informatique stocké sur un support de stockage lisible par ordinateur, dans lequel le programme informatique comprend des instructions de programme qui, lorsqu'elles sont exécutées par un ordinateur, amènent l'ordinateur à mettre en œuvre le procédé d'affichage selon l'une des revendications 1 à 3.
